# EUROPÄISCHE PATENTSCHRIFT

(11) **EP 2 721 803 B1**
(45) Veröffentlichungstag und Bekanntmachung des Hinweises auf die Patenterteilung: **27.09.2017**
(21) Anmeldenummer: 12751034.5
(22) Anmeldetag: 10.08.2012
(51) Int. Cl.: H04L 29/06, H04L 12/24

(54) **VERFAHREN UND VORRICHTUNG ZUR GESICHERTEN VERÄNDERUNG EINER KONFIGURATIONSEINSTELLUNG EINES NETZWERKGERÄTES**
METHOD AND DEVICE FOR SECURELY CONFIGURING A NETWORK DEVICE
MÉTHODE ET SYSTÈME POUR CONFIGURER UN DISPOSITIF DE RÉSEAU D'UNE FAÇON SÉCURE

(30) Priorität: 12.09.2011 DE 102011082489
(43) Veröffentlichungstag der Anmeldung: 23.04.2014
(73) Patentinhaber: Siemens Aktiengesellschaft, 80333 München (DE)
(72) Erfinder: FALK, Rainer, 85586 Poing (DE); SEIFERT, Matthias, 38126 Braunschweig (DE)
(86) Internationale Anmeldenummer: PCT/EP2012/065677
(87) Internationale Veröffentlichungsnummer: WO 2013/037578

(56) Entgegenhaltungen:
- US-A1- 2006 236 095
- US-A1- 2006 242 695

## Beschreibung

Netzwerkgeräte verfügen über Schnittstellen bzw. Netzwerkkommunikationsschnittstellen, über die sie mit anderen Netzwerkgeräten des Netzwerkes kommunizieren können. Netzwerkgeräte einer Automatisierungsanlage, insbesondere Feldgeräte zur Überwachung und Steuerung von Automatisierungskomponenten, verfügen zunehmend über Netzwerkkommunikationsschnittstellen, die eine Übertragung von Diagnosedaten, Konfigurationsdaten, Betriebsdaten, Steuerdaten, Überwachungsdaten usw. über Datennetzwerke ermöglichen. Diese Datennetzwerke sind zum Teil offene Kommunikationsnetzwerke, insbesondere Ethernetdaten-Netzwerke oder IP-basierte Datennetzwerke. Die gesteuerten bzw. überwachten Automatisierungskomponenten sind beispielsweise Automatisierungskomponenten eines Energienetzwerkes, eines Kraftwerkes oder eines Transportsystems, beispielsweise Automatisierungseinrichtungen, Weichen, Schranken und dergleichen. Weiterhin kann es sich bei den angesteuerten Automatisierungskomponenten beispielsweise um Ampelanlagen, Pipelines, Raffinerien oder Fertigungsanlagen handeln. Zur Ansteuerung derartiger Automatisierungskomponenten benötigen Netzwerkgeräte einer Automatisierungsanlage Konfigurationseinstellungen, beispielsweise eine Netzwerkadresse eines Automatisierungs-Servers oder kryptographische Schlüssel.

Bei herkömmlichen Automatisierungsanlagen bzw. -netzwerken erfolgt das Einrichten von Gerätekonfigurationen bzw. Durchführen einer Konfigurationseinstellung meist über einen direkten Konfigurationszugang. Dieser direkte Konfigurationszugang weist beispielsweise eine serielle Schnittstelle, z.B. RS232 oder USB, auf, welche eine Verbindung zu einem Wartungs-PC erlaubt. Das Einrichten einer Gerätekonfiguration über einen direkten Konfigurationszugang ist allerdings umständlich und mühsam, insbesondere für eine große Anzahl von zu installierenden Automatisierungskomponenten innerhalb des Netzwerkes. Ferner kann diese herkömmliche Vorgehensweise zu Sicherheitsproblemen führen, wenn ein unberechtigter Konfigurationszugang erfolgt. Bei derartigen herkömmlichen Netzwerkgeräten bzw. Automatisierungsgeräten innerhalb einer Automatisierungsanlage können Netzwerkgeräte auch eine spezielle Nutzerschnittstelle zur Durchführung der Gerätekonfiguration aufweisen. Diese Nutzerschnittstelle weist beispielsweise Tasten und/oder ein Touchscreen bzw. Tasten und ein Display auf. Dies stellt bei einer Vielzahl von Automatisierungskomponenten oder Netzwerkgeräten einen erheblichen technischen Aufwand dar. Darüber hinaus sind in bestimmten industriellen Anwendungen und den dort herrschenden rauen Verhältnissen derartige Nutzerschnittstellen nicht praktikabel bzw. fehleranfällig. US2006236095 offenbart ein Verfahren zur gesicherten Veränderung einer Konfiguration eines Netzwerkgeräts, wobei die Veränderung nur nach Authentisierung des Netzwerkgeräts zugelassen wird.

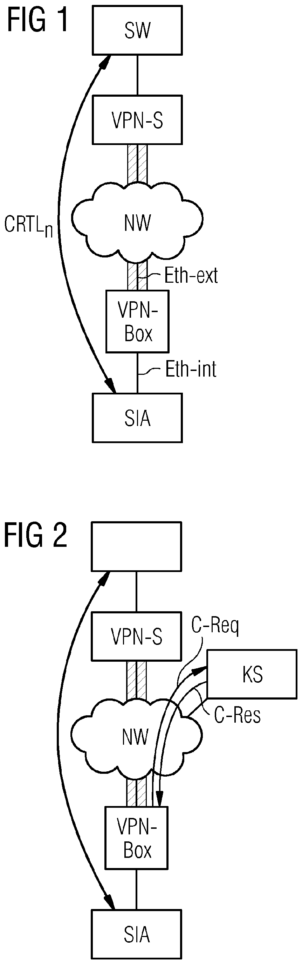

Fig. 1 zeigt ein Beispiel eines Netzwerkgerätes zur Erläuterung der der Erfindung zugrunde liegenden Problematik. Bei dem dargestellten Anwendungsfall bzw. Use Case ist ein Feldkommunikationsverschlüsselungsgerät, das auch als VPN-Box bezeichnet wird, mit einer externen IP-basierten Netzwerkschnittstelle Eth-ext und einer internen IP-basierten Netzwerkschnittstelle Eth-int vorgesehen. Das Feldgerät (VPN-BOX) ist mit Sensoren und/oder Aktoren (S/A) verbunden, beispielsweise einer Weiche bzw. einer Weichensteuerung, die über ein Stellwerk SW gesteuert wird. Die Steuer- und/oder Überwachungsdaten CRTL werden bei der Übertragung über ein Netzwerk NW über ein sogenanntes Virtual Private Network VPN übertragen, d.h. über eine gegen Manipulation geschützte Kommunikationsverbindung. Die Steuerdaten bzw. Überwachungsdaten werden CRTL dazu kryptographisch geschützt zwischen dem Feldgerät (VPN-BOX) und einem VPN-Server (VPN-S) übertragen. Dazu kann z.B. ein IPsec-Protokoll, ein L2TP-Protokoll, ein PPTP-Protokoll oder ein SSL/TLS-Protokoll verwendet werden. Die Adresse des VPN-Servers VPN-S sowie zugeordnete kryptographische Credentials wie z.B. kryptographische Schlüssel, digitale Zertifikate oder Passwörter, werden dabei bei der Inbetriebnahme des Feldkommunikationsverschlüsselungsgerätes z.B. über die interne Netzwerkschnittstelle oder über eine separate, nicht dargestellte Wartungs- und Diagnoseschnittstelle konfiguriert. Dabei ist zu verhindern, dass diese Konfigurationseinstellung unberechtigt bei einem im Feld installierten Feldgerät durch einen Netzwerkangriff ausgelesen oder manipuliert werden kann. Ferner ist jedoch auch ein Zurücksetzen bzw. Löschen der Feldgerätekonfiguration zu ermöglichen, insbesondere, wenn kein Administrationszugang zu dem Feldkommunikationsverschlüsselungsgerät (VPN-BOX) mehr möglich ist, beispielsweise, wenn ein Passwort oder ein kryptographischer Schlüssel verloren gegangen ist.

Ein herkömmliches Feldkommunikationsverschlüsselungsgerät verfügt meist über einen eigenen Reset-Taster zum Zurücksetzen bzw. Löschen seines Konfigurationsspeichers. Ein Nachteil hierbei ist, dass ein derartiger Reset-Taster, beispielsweise aufgrund von Erschütterungen, aus Versehen betätigt und somit eine Fehlfunktion herbeiführen könnte oder ein derartiger Taster bzw. Kontakt in der rauen Feldumgebung, in der sich das Feldkommunikationsverschlüsselungsgerät befindet, verschmutzt wird und nicht mehr betätigbar ist.

Es ist möglich, dass das Feldkommunikationsverschlüsselungsgerät bzw. die VPN-Box seine Gerätekonfiguration über die externe Netzwerkschnittstelle, beispielsweise über eine externe Ethernet-Schnittstelle Eth-ext lädt, beispielsweise über eine mit SSL oder TLS verschlüsselte Kommunikationsverbindung über das Netzwerk NW von einem Konfigurationsserver KS, wie er in Fig. 2 dargestellt ist. Das Feldgerät bzw. die VPN-Box lädt dabei über die externe Netzwerkschnittstelle Eth-ext von einem Feldgerätekonfigurationsserver KS eine Konfigurationsinformation, beispielsweise eine Konfigurationsdatei im Text- oder XML-Format zum Betrieb des Feldgeräts. Der konfigurierten Adresse des Feldgerätekonfigurationsservers ist gegebenenfalls ein Security Credential zugeordnet, bei dem es sich um einen kryptographischen Schlüssel, ein Passwort oder ein digitales Zertifikat handeln kann, und das zum kryptographisch geschützten Zugriff auf den Feldgerätekonfigurationsserver vorgesehen ist. Beispielsweise kann sich die VPN-Box gegenüber dem Konfigurationsserver KS mittels eines Authentisierungs-Credentials authentisieren und selbst den Konfigurationsserver KS authentifizieren und daraufhin Konfigurationsdaten anfordern (C-Reg). Anschließend werden die Konfigurationsdaten von dem Konfigurationsserver KS empfangen (C-Res). Die Konfigurationseinstellung für die VPN-Box umfasst beispielsweise Informationen über die Adresse eines VPN-Servers VPN-S über ein zu verwendendes VPN-Protokoll sowie die Beschreibung von Security Associations des VPN-Tunnels der Konfigurationsparameter für ein Schlüsselvereinbarungsprotokoll wie z.B. IKE - Internet Key Exchange - oder IKEv2. Die Konfigurationseinstellung für die VPN-Box kann Credentials, z.B. einen kryptographischen Schlüssel, ein Passwort, oder ein digitales Zertifikat umfassen. Weiterhin können die Konfigurationseinstellungen Filterregelungen über einen zugelassenen Datenverkehr umfassen.

Dies hat den Vorteil, dass Änderungen der Konfiguration während des Betriebs des Feldgerät bzw. der VPN-Box erfolgen können, indem eine geänderte Konfigurationsinformation durch den Konfigurationsserver KS bereitgestellt wird. Damit der in Fig. 2 dargestellte Autokonfigurationsmechanismus zum Laden der Konfigurationsdaten erfolgen kann, muss auf der VPN-Box die Netzwerkadresse des Konfigurationsservers KS konfiguriert sein. Ferner ist dazu gegebenenfalls ein Zertifikat Z und/oder ein kryptographischer Schlüssel K auf dem Feldkommunikationsverschlüsselungsgerät bzw. der VPN-Box zu konfigurieren.

Bei einer herkömmlichen Anlage enthält das Feldkommunikationsverschlüsselungsgerät bzw. die VPN-Box eine lokale Konfigurationsschnittstelle, beispielsweise in Form einer seriellen Schnittstelle nach RS232, die einen zusätzlichen schaltungstechnischen Aufwand darstellt. Es besteht auch bei der in Fig. 2 dargestellten herkömmlichen Anordnung die Notwendigkeit, die für den Zugriff auf den Feldgerätekonfigurationsserver KS benötigen Konfigurationsdaten, insbesondere dessen Netzwerkadresse, auf dem Netzwerkfeldgerät, insbesondere der in Fig. 2 dargestellten VPN-Box, geschützt einzurichten bzw. die Konfiguration des netzwerkfähigen Feldgerätes geschützt zu löschen oder zu ändern, ohne dafür eine eigene zusätzliche Konfigurationsschnittstelle vorsehen zu müssen.

### Zusammenfassung der Erfindung

Eine Aufgabe der vorliegenden Erfindung besteht darin, ein Verfahren und eine Vorrichtung bereitzustellen, mit deren Hilfe eine Konfigurationseinstellung eines Netzwerkgeräts geschützt veränderbar ist, ohne dass dafür an dem Netzwerkgerät eine zusätzliche Konfigurationsschnittstelle vorgesehen werden muss.

Diese Aufgabe wird erfindungsgemäß durch ein Verfahren mit dem in Patentanspruch 1 angegebenen Merkmalen gelöst.

Die Erfindung schafft demnach ein Verfahren zur gesicherten Veränderung einer Konfigurationseinstellung eines Netzwerkgeräts, das über mindestens eine Schnittstelle an ein anderes Netzwerkgerät anschließbar ist,
wobei die Konfigurationseinstellung des Netzwerkgeräts veränderbar ist, sofern ein erfasster physikalischer Beschaltungszustand der mindestens einen Schnittstelle des Netzwerkgeräts vorliegt, der in einem Regelbetrieb des Netzwerkgeräts nicht auftritt.

Bei einer möglichen Ausführungsform des erfindungsgemäßen Verfahrens wird der erfasste physikalische Beschaltungszustand der mindestens einen Schnittstelle des Netzwerkgeräts anhand von vorgegebenen Prüfkriterien dahingehend überprüft, ob der physikalische Beschaltungszustand in einem Regelbetrieb bzw. Normalbetrieb des Netzwerkgeräts auftreten oder nicht auftreten kann.

Bei einer möglichen Ausführungsform des erfindungsgemäßen Verfahrens wird eine Veränderung der Konfigurationseinstellung des Netzwerkgeräts auch ohne eine Authentisierung des Zugreifenden, beispielsweise einem Konfigurationsserver des Netzwerks oder einem Wartungs-PC, zugelassen, falls der ermittelte physikalische Beschaltungszustand in einem Regelbetrieb des Netzwerkgeräts nicht auftritt.

Bei einer möglichen Ausführungsform des erfindungsgemäßen Verfahrens wird eine Veränderung der Konfigurationseinstellung des Netzwerkgeräts zugelassen, falls der ermittelte physikalische Beschaltungszustand in einem Regelbetrieb des Netzwerkgeräts auftreten kann, sofern eine Authentisierung des Zugreifenden, beispielsweise einem Konfigurationsserver oder einem Wartungs-PC, erfolgreich durchgeführt worden ist.

Bei einer möglichen Ausführungsform des erfindungsgemäßen Verfahrens weist die Konfigurationseinstellung des Netzwerkgeräts eine Netzwerkadresse eines Konfigurationsservers auf.

Bei einer weiteren möglichen Ausführungsform des erfindungsgemäßen Verfahrens werden bei einer Veränderung der Netzwerkadresse des Konfigurationsservers die durch den bisherigen Konfigurationsserver bereitgestellten Konfigurationsdaten des Netzwerkgeräts gelöscht.

Bei einer möglichen Ausführungsform des erfindungsgemäßen Verfahrens wird eine Veränderbarkeit der Konfigurationseinstellung des Netzwerkgeräts an mindestens ein anderes Netzwerkgerät des Netzwerks oder einem Konfigurationsgerät signalisiert, woraufhin die für die Rekonfiguration vorgesehenen Konfigurationsdaten automatisch an das Netzwerkgerät übermittelt werden.

Bei einer möglichen Ausführungsform des erfindungsgemäßen Verfahrens werden die übermittelten Konfigurationsdaten zur Veränderung der Konfigurationseinstellung des Netzwerkgerätes in einem Konfigurationsdatenspeicher des Netzwerkgeräts lokal gespeichert.

Bei einer möglichen Ausführungsform des erfindungsgemäßen Verfahrens wird die mindestens eine Schnittstelle des Netzwerkgeräts mit einem Konfigurationsgerät verbunden, das einen physikalischen Beschaltungszustand des Netzwerkgeräts herbeiführt, welcher in einem Regelbetrieb des Netzwerkgeräts nicht auftritt bzw. nicht auftreten kann, um eine Veränderung der Konfigurationseinstellung des Netzwerkgeräts zuzulassen bzw. freizugeben.

Bei einer möglichen Ausführungsform des erfindungsgemäßen Netzwerkgeräts ist das Netzwerkgerät ein Automatisierungsgerät einer Automatisierungsanlage, insbesondere ein Feldgerät.

Die Erfindung schafft ferner ein Netzwerkgerät mit den im Patentanspruch 11 angegebenen Merkmalen.

Die Erfindung schafft demnach ferner ein Netzwerkgerät, das über mindestens eine Schnittstelle an ein anderes Netzwerkgerät anschließbar ist,
wobei eine Konfigurationseinstellung des Netzwerkgeräts nur veränderbar ist, falls ein erfasster physikalischer Beschaltungszustand der mindestens einen Schnittstelle des Netzwerkgeräts vorliegt, der in einem Regelbetrieb des Netzwerkgeräts nicht auftritt.

Bei einer möglichen Ausführungsform des erfindungsgemäßen Netzwerkgeräts ist die mindestens eine Schnittstelle eine drahtgebundene Schnittstelle.

Ferner kann es sich bei der Schnittstelle auch um eine drahtlose Kommunikationsschnittstelle handeln.

Bei einer möglichen Ausführungsform des erfindungsgemäßen Netzwerkgeräts weist das Netzwerkgerät eine integrierte Erkennungseinrichtung zur Erkennung des physikalischen Beschaltungszustandes der mindestens einen Schnittstelle auf.

Bei der mindestens einen Schnittstelle handelt es sich um eine Schnittstelle, die für den normalen Betrieb bzw. Regelbetrieb des Netzwerkgeräts vorgesehen ist und nicht um eine eigens für die Konfiguration vorgesehene Kommunikationsschnittstelle des Netzwerkgeräts. Das Netzwerkgerät weist vorzugsweise keine eigenständige Konfigurationsschnittstelle auf.

Die Erfindung schafft ferner ein Netzwerk mit den im Patentanspruch 15 angegebenen Merkmalen.

Die Erfindung schafft demnach ein Netzwerk, insbesondere ein Netzwerk einer Automatisierungsanlage, das Netzwerkgeräte aufweist, wobei die Netzwerkgeräte jeweils über eine Schnittstelle an andere Netzwerkgeräte des Netzwerks anschließbar sind,
wobei eine Konfigurationseinstellung eines Netzwerkgeräts nur veränderbar ist, wenn ein erfasster physikalischer Beschaltungszustand der mindestens einen Schnittstelle des Netzwerkgeräts vorliegt, der in einem Regelbetrieb des Netzwerkgeräts innerhalb des Netzwerks nicht auftritt.

Die Erfindung schafft ferner ein Konfigurations- bzw. Konfigurierungsgerät mit den im Patentanspruch 16 angegebenen Merkmalen.

Die Erfindung schafft demnach ein Konfigurierungsgerät für ein Netzwerkgerät eines Netzwerks,
wobei das Konfigurierungsgerät an mindestens eine Schnittstelle des Netzwerkgeräts anschließbar ist und einen physikalischen Beschaltungszustand an dem Netzwerkgerät herbeiführt, der in einem Regelbetrieb des Netzwerkgeräts nicht auftritt, wodurch eine Veränderung der Konfigurationseinstellung des Netzwerkgeräts zugelassen wird.

Im Weiteren werden mögliche Ausführungsformen des erfindungsgemäßen Verfahrens und der erfindungsgemäßen Vorrichtung zur gesicherten Veränderung einer Konfigurationseinstellung eines Netzwerkgeräts unter Bezugnahme auf die beigefügten Figuren näher erläutert.

Es zeigen:
- Fig. 1: ein Anwendungsbeispiel zur Erläuterung der der Erfindung zugrunde liegenden Problematik;
- Fig. 2: ein weiteres Diagramm zur Erläuterung der der Erfindung zugrunde liegenden Problematik;
- Fig. 3: ein Blockschaubild zur Darstellung eines Ausführungsbeispiels eines erfindungsgemäßen Netzwerkgeräts, bei dem das erfindungsgemäße Verfahren zur gesicherten Veränderung einer Konfigurationseinstellung ausgeführt werden kann;
- Fig. 4: ein Ablaufdiagramm eines Ausführungsbeispiels des erfindungsgemäßen Verfahrens zur gesicherten Veränderung einer Konfigurationseinstellung eines Netzwerkgeräts; und
- Fig. 5: ein weiteres Ablaufdiagramm zur Darstellung eines Ausführungsbeispiels des erfindungsgemäßen Verfahrens zur gesicherten Veränderung einer Konfigurationseinstellung eines Netzwerkgeräts.

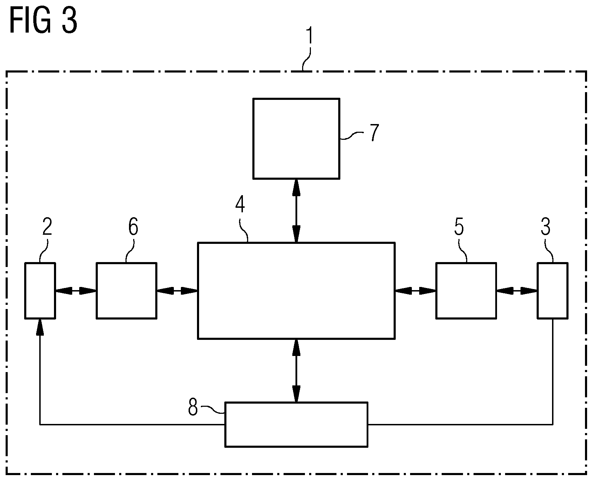

Wie man aus Fig. 3 erkennen kann, weist ein Netzwerkgerät 1 in dem dargestellten Ausführungsbeispiel zwei Kommunikationsschnittstellen auf. Bei dem in Fig. 3 dargestellten Netzwerkgerät 1 handelt es sich beispielsweise um eine VPN-Box zum kryptographisch geschützten Übertragen von Steuer- und Überwachungsdaten eines verbundenen Automatisierungsgeräts. Das Netzwerkgerät 1 verfügt über zwei Schnittstellen 2, 3, die beispielsweise Ethernet-Schnittstellen sind. Über die interne Ethernet-Schnittstelle 2 ist das Netzwerkgerät beispielsweise mit einem Sensor oder Aktor S/A verbindbar, beispielsweise mit einer Bahnweiche oder Bahnübergangsschranke bzw. einem Steuergerät der Bahnweiche oder der Bahnübergansschranke. Über die externe Ethernet-Schnittstelle 3 ist das Netzwerkgerät 1 beispielsweise über ein Netzwerk NW mit einem VPN-Server VPN-S und/oder einem Konfigurationsserver KS verbindbar. Die beiden Schnittstellen 2, 3 des Netzwerkgerätes 1 sind mit einer integrierten Steuereinheit 4 über ein Kommunikations-Interface 5, 6 verbunden. Weiterhin ist die Steuereinheit bzw. CPU mit einem Konfigurationsspeicher 7 verbunden, der Konfigurationsdaten bzw. Konfigurationseinstellungen des Netzwerkgerätes 1 lokal speichert. Die Steuereinheit 4 verschlüsselt die über die Schnittstelle 2 empfangenen Daten und versendet die verschlüsselten Daten über die Schnittstelle 3 an die damit verbundenen Geräte. Weiterhin entschlüsselt die Steuereinheit 4 die von der externen Ethernet-Schnittstelle 3 empfangenen Daten und sendet die entschlüsselten Daten über die interne Ethernet-Schnittstelle 2. In dem Konfigurationsspeicher 7 können Konfigurationsdaten abgelegt sein, insbesondere Adressinformationsdaten sowie kryptographische Schlüssel. Das in Fig. 3 dargestellte Netzwerkgerät 1 verfügt über keinen Reset-Taster, beispielsweise zum Zurücksetzen oder Löschen des Konfigurationsspeichers 7. Darüber hinaus verfügt das Netzwerkgerät 1 über keine lokale Wartungsschnittstelle bzw. Konfigurationsschnittstelle. Da das Netzwerkgerät 1 über die beiden Schnittstellen 2, 3 an andere Netzwerkgeräte anschließbar ist, können seine im lokalen Konfigurationsspeicher 7 gespeicherte Konfigurationseinstellungen dann verändert werden, wenn ein erfasster physikalischer Beschaltungszustand der mindestens einen Schnittstelle 2, 3 des Netzwerkgeräts in einem Regel- bzw. Normalbetrieb des Netzwerkgeräts nicht auftritt bzw. nicht auftreten kann. Das Netzwerkgerät 1 verfügt vorzugsweise über eine integrierte Erkennungseinrichtung 8 zur Erkennung des physikalischen Beschaltungszustandes von einer oder beiden Schnittstellen 2, 3. Alternativ kann die Erkennung des Beschaltungszustandes auch durch die Steuereinrichtung 4 erfolgen. Dabei wird der erfasste physikalische Beschaltungszustand der Schnittstellen 2, 3 des Netzwerkgeräts 1 bei einer möglichen Ausführungsform anhand vorgegebener Prüfkriterien dahingehend überprüft, ob der Beschaltungszustand in einem Regel- bzw. Normalbetrieb des Netzwerkgeräts auftreten bzw. nicht auftreten kann. Derartige Prüfkriterien hinsichtlich einer ordnungsgemäßen Verdrahtung bzw. Beschaltung umfassen beispielsweise die Prüfung, ob die interne Netzwerkschnittstelle 2 nur mit einem Gerät verbunden ist und an der externen Netzwerkschnittstelle 3 kein Gerät bzw. kein Verbindungskabel angeschlossen ist. Dies ist beispielsweise über Media-Detekt bei einer Ethernet-Schnittstelle erkennbar oder durch Vorsehen eines entsprechenden Sensors. Ein Sensor kann z.B. erfassen, ob ein Stecker eingesteckt ist, oder den Widerstand und/oder Kapazität und/oder Impedanz zwischen Kontakten des oder der Netzwerkschnittstellen 2, 3 erfassen. Weiterhin kann der Ansteckvorgang geprüft werden. Ein weiteres Prüfkriterium ist, ob ein Kurzschluss zwischen Kontakten eines Verbinders oder zwischen Kontakten unterschiedlicher Verbinder gegeben ist bzw. auftritt. Falls das Netzwerkgerät 1 beispielsweise eine Sensorschnittstelle aufweist, ist ein ungültiger Messwert, der beispielsweise einen außerhalb eines zulässigen Wertebereichs liegenden physikalischen Beschaltungszustand angibt, ein Zustand, der in dem Normalbetrieb des Netzwerkgeräts 1 nicht auftritt. Wenn beispielsweise bei einer Analogschnittstelle mit einem Wertebereich von 4 - 20 mA der gültige Messwert für den Stromfluss in diesem Bereich von 4 mA - 20 mA liegt, gibt ein fließender Strom von beispielsweise 50 mA oder 1 mA einen ungültigen Wert an und stellt einen physikalischen Beschaltungszustand dar, der in einem Regelbetrieb des Netzwerkgeräts 1 nicht auftreten kann. Weitere mögliche Prüfkriterien sind ein vorgegebener elektrischer Widerstand, Kapazität oder eine Impedanz von Kontakten des Verbinders oder zwischen Kontakten unterschiedlicher Verbinder. Außerdem kann hinsichtlich der externen Netzwerkschnittstelle 3 geprüft werden, ob keine Netzwerk-Konnektivität herrscht oder ob beispielsweise eine bestimmte Adresse des Netzwerks, die z.B. als IP-Adresse oder als URL vorgegeben sein kann, nicht erreichbar ist. Auch kann mittels eines Router-Discovery-Protokolls wie dem "ICMP Internet Router Discovery Protocol" (IRDP) geprüft werden, dass kein IP-Router vorhanden ist. Weiterhin kann der Beschaltungszustand dahingehend überprüft werden, ob eine andere Steckerbelegung verwendet wird. Weiterhin ist es möglich, die Erreichbarkeit von anderen Netzwerkkomponenten oder Netzwerkgeräten zu prüfen. Beispielsweise dürfen in einem normalen Regelbetrieb bestimmte Netzwerkkomponenten nicht erreichbar sein. Außerdem können zusätzliche weitere Kriterien geprüft werden. Beispielsweise ist eine Adresse eines Autokonfigurationsservers nur während einer festgelegten Zeitspanne nach Anlegen einer externen Stromversorgung möglich, wenn beispielsweise ein Lagesensor bzw. Montagesensor angibt, dass das Feldgerät bzw. Netzwerkgerät nicht montiert ist, beispielsweise nicht auf einer Hutschiene eingerastet ist. Das in Fig. 3 dargestellte Netzwerkgerät bzw. netzwerkfähige Feldgerät 1 verfügt über elektrische Schnittstellen, beispielsweise die Ethernet-Netzwerkschnittstellen 2, 3. Darüber hinaus kann das Netzwerkgerät auch über andere Schnittstellen verfügen, beispielsweise eine Ein-/Ausgabeschnittstelle, an der Sensoren und/oder Aktoren S/A z.B. über einen Feldbus wie z.B. einem CAN-Bus, einem M-Bus oder einem Profibus oder über eine Analogschnittstelle oder Digitalschnittstelle anschließbar sind. Damit das Netzwerkgerät 1 seine bestimmungsgemäße Funktion erfüllen kann, muss es korrekt angeschlossen sein bzw. verdrahtet sein. Mit Verdrahtung ist dabei die Beschaltung der physikalischen Schnittstellen gemeint. Ein Prüfkriterium kann sich auf physikalische Eigenschaften einer Schnittstelle und gegebenenfalls auch auf logische Eigenschaften der Schnittstelle beziehen.

Das erfindungsgemäße Netzwerkgerät 1 verfügt über eine Funktionalität zur Ermittlung einer Information, die von der aktuell vorliegenden Verdrahtung bzw. dem aktuellen physikalischen Beschaltungszustand des Feldgerätes bzw. Netzwerkgerätes 1 abhängt. Die Erkennungseinrichtung 8 prüft dabei, ob eine ordnungsgemäße physikalische Beschaltung vorliegt. Falls dies nicht der Fall ist, d.h. die Verdrahtung bzw. die Beschaltung des Netzwerkgerätes 1 fehlerhaft bzw. "unsinnig" ist, wird eine gespeicherte Konfigurationseinstellung, beispielsweise in dem Konfigurationsspeicher 7 gespeicherten Konfigurationsdaten, veränderbar. Die Veränderung der Konfigurationsdaten kann nur erfolgen, wenn eine im Regel- bzw. Normalbetrieb des Netzwerkgerätes 1 nicht sinnvolle oder nicht zulässige Beschaltung vorliegt. Dabei ist es möglich, das Vorliegen einer beliebigen fehlerhaften Beschaltung bzw. Verdrahtung oder das Vorliegen einer bestimmten vorgegebenen fehlerhaften Verdrahtung zu überprüfen. In einer Variante wird nicht eine beliebige fehlerhafte Beschaltung bzw. Verdrahtung akzeptiert, um die Änderung der Konfigurationseinstellung freizugeben, sondern nur eine oder mehrere bestimmte vorgegebene fehlerhafte Verdrahtungen bzw. Beschaltungen.

Dadurch, dass eine spezielle, in dem Regelbetrieb des Netzwerkgerätes 1 nicht auftretende Verdrahtung bzw. Beschaltung des Netzwerkgerätes 1 geprüft wird, wird zudem zuverlässig gewährleistet, dass bei einem für den Regelbetrieb installierten Netzwerkgerät 1 diese Funktionalität nicht aufrufbar ist. Insbesondere ist diese Funktionalität zur Veränderung der Konfigurationseinstellung nicht durch eine Datenkommunikation, über eine Netzwerkschnittstelle, beispielsweise die in Fig. 3 dargestellten Netzwerkschnittstellen 2, 3, durch einen Angreifer durchführbar. Dadurch wird zuverlässig verhindert, dass von einem anderen Netzwerkgerät aus ein durch Übertragung geeigneter Datenpakete Factory-Reset bzw. ein Zurücksetzen der Konfigurationseinstellungen ausgelöst werden kann. Dadurch wird ein deutlich höherer Schutz gegenüber Missbrauch im Vergleich zu herkömmlichen Netzwerkgeräten erreicht. Solange das Netzwerkgerät ordnungsgemäß beschaltet bzw. verdrahtet ist, sind dessen Konfigurationseinstellungen dadurch verriegelt (englisch "configuration lock") und somit nicht änderbar.

Bei einer möglichen Ausführungsform ist die Konfigurationsänderung bei Erkennen einer nicht ordnungsgemäßen Verdrahtung bzw. Beschaltung auch ohne eine Wartungszugangsauthentisierung möglich, d. h. ohne dass zuvor beispielsweise ein Administrationspasswort eingegeben werden muss, oder ohne dass eine Wartungszugangsauthentisierung unter Verwendung eines kryptographischen Schlüssels durchgeführt werden muss. Dagegen ist die Konfiguration bei Erkennen einer ordnungsgemäßen Verdrahtung bzw. Beschaltung bei einer möglichen Ausführungsvariante nur nach einer erfolgreichen Authentisierungsprüfung des Netzwerkgerätes veränderbar.

Wenn eine üblicherweise als fehlerhaft geltende Verdrahtung bzw. Beschaltung des Netzwerkgerätes 1 vorliegt, ist eine bestimmte Konfigurationseinstellung des Netzwerkgerätes 1 änderbar bzw. auf eine bestimmte Weise änderbar. Eine solche Änderung der Konfigurationseinstellung kann daher nicht erfolgen, wenn das Netzwerkgerät 1 korrekt installiert ist, d. h. wenn es sich in einem operativen Regelbetrieb bzw. Normalbetrieb befindet.

Bei einer möglichen Ausführungsform weist die erfindungsgemäß geschützte Konfigurationseinstellung eine Netzwerkadresse eines Feldgerätekonfigurationsservers KS auf. Das Setzen dieser Netzwerkadresse kann insbesondere über eine erste Netzwerkschnittstelle erfolgen, insbesondere die in Fig. 3 dargestellte interne Netzwerkschnittstelle 2 des Netzwerkgerätes 1, wobei das Laden einer Konfigurationsdatei bzw. der Konfigurationsdaten über eine zweite Netzwerkschnittstelle, insbesondere über die in Fig. 3 dargestellte externe Netzwerkschnittstelle 3, von einem für die Netzwerkadresse bestimmten Feldgerätekonfigurationsserver erfolgen kann.

In einer Variante weist die geschützte Konfigurationseinstellung einen dem Konfigurationsserver KS zugeordneten kryptographischen Schlüssel auf.

In einer Variante verwendet das Netzwerkgerät die geschützte Netzwerkadresse eines Feldgeräteservers KS nur, wenn eine ordnungsgemäße Beschaltung bzw. Verdrahtung des Netzwerkgeräts vorliegt.

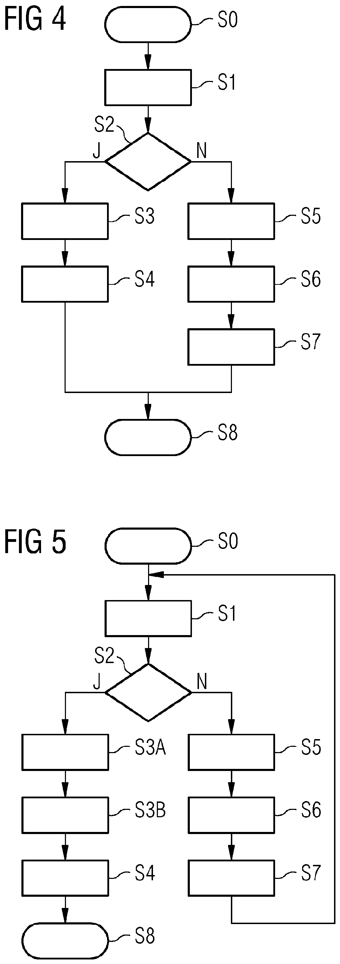

Fig. 4 zeigt ein Ablaufdiagramm zur Darstellung einer Ausführungsvariante des erfindungsgemäßen Verfahrens zur gesicherten Veränderung einer Konfigurationseinstellung eines Netzwerkgerätes 1.

Nach einem Startschritt S0 wird zunächst in einem Schritt S1, beispielsweise durch eine Erkennungseinrichtung 8 des Netzwerkgerätes 1, eine Verkabelung bzw. eine Beschaltung der Schnittstellen des Netzwerkgerätes 1 geprüft.

Ergibt die Überprüfung im Schritt S2, dass die Verkabelung bzw. die Beschaltung ordnungsgemäß ist, wird zunächst im Schritt S3 eine Änderungsmöglichkeit zur Änderung der Konfigurationsdaten gesperrt. Anschließend wird in einem Schritt S4 ein regulärer Betriebsmodus bzw. Regelbetrieb gemäß der gespeicherten Konfigurationsdaten aktiviert.

Ergibt umgekehrt die Überprüfung, dass die Verkabelung bzw. Beschaltung des Netzwerkgerätes 1 nicht ordnungsgemäß ist bzw. der physikalische Beschaltungszustand in einem Regelbetrieb des Netzwerkgerätes 1 nicht auftreten kann, wird in einem Schritt S5 die Veränderbarkeit der Konfigurationseinstellung zugelassen bzw. freigeschaltet und dies gegebenenfalls anderen Netzwerkgeräten signalisiert. In einem weiteren Schritt S6 werden durch das Netzwerkgerät 1 die für die Konfiguration bzw. Re-Konfiguration vorgesehenen Konfigurationsdaten empfangen und in Schritt S7 in dem lokalen Konfigurationsspeicher 7 zur Rekonfiguration gespeichert. Der Vorgang endet in Schritt S8.

Beispielsweise erfolgt das Konfigurieren der Adresse eines Konfigurationsservers KS bei dem erfindungsgemäßen Verfahren wie folgt. Es wird durch ein Feldverschlüsselungsgerät bzw. eine VPN-Box, welches ein Netzwerkgerät 1 gemäß Fig. 3 bildet, überprüft, ob eine ordnungsgemäße Verschaltung des Feldverschlüsselungsgerätes 1 vorliegt. Falls dies der Fall ist, wird ein regulärer Betriebsmodus bzw. Operation Mode in Schritt S4 aktiviert. Falls die Beschaltung nicht ordnungsgemäß ist, wird in Schritt S5 ein Autokonfigurationsmechanismus aktiviert, d. h. es wird ein Ändern der Konfigurationseinstellung der Konfigurationsserveradresse freigeschaltet bzw. zugelassen. Dies kann auch ohne eine Authentisierung mittels eines Passwortes oder mittels eines kryptographischen Schlüssels erfolgen. Das Feldverschlüsselungsgerät 1 empfängt anschließend die Konfigurationsdaten, beispielsweise eine URL des Konfigurationsservers KS und speichert diese Konfigurationsdaten lokal in seinem Konfigurationsspeicher 7 ab.

Bei einer möglichen vorteilhaften Variante wird beim Setzen der Netzwerkadresse des neuen Konfigurationsservers KS die gesamte durch den bisherigen Konfigurationsserver definierte Konfiguration gelöscht. Dadurch wird verhindert, dass Datenreste der bisherigen vorhandenen Konfiguration bestehen bleiben.

Der Konfigurationsablauf kann bei einer möglichen Ausführungsform wiederholt werden, beispielsweise automatisch in regelmäßigen Zeitabständen. Weiterhin kann der Konfigurationsablauf beim Einschalten des Feldverschlüsselungsgeräts 1 bzw. beim Anlegen einer Versorgungsspannung an das Netzwerkgerät erfolgen.

Das Empfangen der Konfigurationsdaten kann bei einer möglichen Ausführungsvariante derart erfolgen, dass das Feldkommunikationsverschlüsselungsgerät 1 über eine interne Schnittstelle 2 eine Broadcast-/Multicastnachricht aussendet, um die Netzwerkadresse eines über die interne Schnittstelle 2 erreichbaren zweiten Konfigurationsservers zu ermitteln. Dies kann beispielsweise eine sogenannte PING-Nachricht an die Broadcast-IP-Adresse 255.255.255.255 sein. Auf diese antwortet der interne Konfigurationsserver mit seiner IP-Adresse, beispielsweise 192.168.15.7. Weiterhin stellt das Feldkommunikationsverschlüsselungsgerät 1, beispielsweise über http, eine Anfrage zur Anforderung einer Konfiguration. Beispielsweise geschieht dies durch Aufrufen mittels GET der URL http://192.168.15.7/Config. Optional kann hierbei eine Identifizierungsinformation hinsichtlich des Herstellers oder eine Seriennummer des Feldverschlüsselungsgeräts 1 mit übertragen werden, beispielsweise kann die URL einkodiert werden (http://192.168.15.7/Config?Siemens-VPN-Box-071382456). Der zweite interne Konfigurationsserver kann bei einer möglichen Ausführungsform hierauf antworten, indem er eine Konfigurationsinformation bereitstellt. Dabei kann insbesondere die Netzwerkadresse, d. h. die IP-Adresse, der DNS-Name oder die URL, die Adresse des ersten Konfigurationsservers umfassen, der über die erste Netzwerkschnittstelle erreichbar ist. Das Feldverschlüsselungsgerät 1 speichert diese Konfigurationsinformation lokal in seinem Konfigurationsspeicher 7. Im regulären Betrieb bzw. Regelbetrieb wird dann die Konfiguration von dieser Netzwerkadresse geladen.

Fig. 5 zeigt ein Ablaufdiagramm zur Darstellung einer Ausführungsvariante des erfindungsgemäßen Verfahrens. Die Schritte S0 - S2 sind die gleichen wie bei der in Fig. 4 dargestellten Ausführungsvariante. Ergibt die Prüfung in Schritt S2, dass die Verkabelung ordnungsgemäß ist, wird in Schritt S3a zunächst eine Änderung der Konfiguration "Address-Config-Server" gesperrt. Anschließend werden im Schritt S3b die Konfigurationsdaten von der Netzwerkadresse "Address-Config-Server" geladen. Dann wird in Schritt S4 ein regulärer Betriebsmodus bzw. Regelbetrieb gemäß der geladenen Konfigurationsdaten aktiviert. Ergibt umgekehrt die Prüfung eine nicht ordnungsgemäße Beschaltung bzw. Verkabelung, wird in Schritt S5 eine Änderung der Konfiguration "Address-Config-Server" ermöglicht bzw. zugelassen.

Anschließend werden in Schritt S6 die Konfigurationsdaten bezüglich "Address-Config-Server" empfangen.

Die Konfigurationsdaten werden bezüglich "Address-Config-Server" im Schritt S7 gespeichert. Nach diesem Schritt S7 kehrt der Vorgang zu Schritt S1 zurück.

Bei dem erfindungsgemäßen Verfahren zur gesicherten Veränderung einer Konfigurationseinstellung ist ein versehentliches Ändern oder gar eine absichtliche Manipulation der änderungsgeschützten Konfigurationseinstellung des ordnungsgemäß installierten, sich in einem regulären Betrieb befindlichen Netzwerkgerätes 1 nicht möglich bzw. wird zuverlässig verhindert. Insbesondere wird eine Manipulation durch Außenstehende, die keinen physikalischen Zugang zu dem Netzwerkgerät 1 haben, sondern nur remote über eine Netzwerkverbindung Zugriff auf das Netzwerkgerät 1 haben, zuverlässig verhindert.

Das Setzen der Adresse eines Feldgerätekonfigurationsservers KS mit zwei Netzwerkschnittstellen über die interne Schnittstelle ist nur dann möglich, wenn die Netzwerkkonfiguration an der internen und/oder externen Netzwerkschnittstelle 2, 3 ein bestimmtes Prüfkriterium erfüllt. Dabei wird überprüft, ob eine Netzwerkkonfiguration vorliegt, die in einem Regelbetrieb des Netzwerkgeräts 1 nicht auftreten kann. Dadurch wird eine unbeabsichtigte, unzulässige Änderung im Regelbetrieb des Netzwerkgeräts 1 verhindert. Eine Änderung der Konfigurationseinstellung ist nur möglich über einen direkten physikalischen Zugang zu dem Netzwerkgerät 1. Dabei wird erfindungsgemäß ein Schutzniveau erreicht, das vergleichbar ist mit einem Reset-Taster, ohne dass dazu ein entsprechender Reset-Taster an dem Netzwerkgerät 1 vorgesehen werden muss. Daher kann ein erfindungsgemäßes Netzwerkgerät 1 auch in einer Umgebung eingesetzt werden, die zu einer starken Verschmutzung eines derartigen Reset-Tasters führen würde. Weiterhin wird hierdurch die Gefahr ausgeschlossen, dass es zu Fehlauslösungen, beispielsweise durch Schwingungen des Reset-Tasters, kommen kann. Weiterhin wird durch die Möglichkeit, auf einen Reset-Taster zu verzichten, der schaltungstechnische Aufwand des Netzwerkgeräts 1 reduziert.

## Patentansprüche

1. Verfahren zur gesicherten Veränderung einer Konfigurationseinstellung eines Netzwerkgeräts (1), das über mindestens eine Schnittstelle (2; 3) an andere Netzwerkgeräte anschließbar ist,
wobei die Konfigurationseinstellung des Netzwerkgeräts (1) veränderbar ist, sofern ein erfasster physikalischer Beschaltungszustand der mindestens einen Schnittstelle (2; 3) des Netzwerkgeräts (1) vorliegt, der in einem Regelbetrieb des Netzwerkgeräts (1) nicht auftritt.

2. Verfahren nach Anspruch 1,
wobei der erfasste physikalische Beschaltungszustand der mindestens einen Schnittstelle (2; 3) des Netzwerkgeräts (1) anhand von vorgegebenen Prüfkriterien dahingehend überprüft wird, ob der physikalische Beschaltungszustand in einem Regelbetrieb des Netzwerkgeräts (1) auftreten oder nicht auftreten kann.

3. Verfahren nach Anspruch 1 oder 2,
wobei eine Veränderung der Konfigurationseinstellung des Netzwerkgeräts (1) auch ohne eine Authentisierung des Netzwerkgeräts (1) zugelassen wird, falls der ermittelte physikalische Beschaltungszustand in einem Regelbetrieb des Netzwerkgeräts (1) nicht auftritt.

4. Verfahren nach einem der Ansprüche 1 bis 3,
wobei eine Veränderung der Konfigurationseinstellung des Netzwerkgeräts (1) zugelassen wird, falls der ermittelte physikalische Beschaltungszustand in einem Regelbetrieb des Netzwerkgeräts (1) auftreten kann, sofern eine Authentisierung des Netzwerkgeräts (1) erfolgreich durchgeführt wird.

5. Verfahren nach einem der vorangehenden Ansprüche 1 bis 4, wobei die Konfigurationseinstellung des Netzwerkgeräts (1) eine Netzwerkadresse eines Konfigurationsservers (KS) aufweist.

6. Verfahren nach Anspruch 5,
wobei bei einer Veränderung der Netzwerkadresse des Konfigurationsservers (KS) die durch den bisherigen Konfigurationsserver bereitgestellten Konfigurationsdaten des Netzwerkgeräts (1) gelöscht werden.

7. Verfahren nach einem der vorangehenden Ansprüche 1 bis 6, wobei eine Veränderbarkeit der Konfigurationseinstellung des Netzwerkgerätes (1) an mindestens ein anderes Netzwerkgerät des Netzwerkes oder einem Konfigurationsgerät signalisiert wird, woraufhin die für eine Rekonfiguration des Netzwerkgeräts (1) vorgesehenen Konfigurationsdaten automatisch an das Netzwerkgerät (1) übermittelt werden.

8. Verfahren nach Anspruch 7,
wobei die übermittelten Konfigurationsdaten zur Veränderung der Konfigurationseinstellung des Netzwerkgeräts (1) in einen Konfigurationsdatenspeicher (7) des Netzwerkgeräts (1) gespeichert werden.

9. Verfahren nach Anspruch 1,
wobei die mindestens eine Schnittstelle (2; 3) des Netzwerkgeräts (1) mit einem Konfigurationsgerät verbunden wird, das einen physikalischen Beschaltungszustand an dem Netzwerkgerät (1) herbeiführt, der in einem Regelbetrieb des Netzwerkgeräts (1) nicht auftritt, um eine Veränderung der Konfigurationseinstellung des Netzwerkgeräts (1) zuzulassen.

10. Verfahren nach Anspruch 9,
wobei das Konfigurationsgerät oder ein anderes Netzwerkgerät nach Zulassung der Veränderung der Konfigurationseinstellung des Netzwerkgeräts (1) Konfigurationsdaten, die für eine Rekonfiguration des Netzwerkgeräts (1) vorgesehen sind, über die gleiche oder eine andere Schnittstelle des Netzwerkgeräts (1) überträgt.

11. Netzwerkgerät (1), das über mindestens eine Schnittstelle (2; 3) an ein anderes Netzwerkgerät anschließbar ist,
wobei eine Konfigurationseinstellung des Netzwerkgeräts (1) nur veränderbar ist, falls ein erfasster physikalischer Beschaltungszustand der mindestens einen Schnittstelle (2; 3) des Netzwerkgeräts (1) vorliegt, der in einem Regelbetrieb des Netzwerkgeräts (1) nicht auftritt.

12. Netzwerkgerät nach Anspruch 11,
wobei die Schnittstelle (2; 3) eine drahtlose oder eine drahtgebundene Schnittstelle ist.

13. Netzwerkgerät nach Anspruch 11 oder 12,
wobei das Netzwerkgerät (1) eine Erkennungseinrichtung (8) zur Erkennung des physikalischen Beschaltungszustands der mindestens einen Schnittstelle (2; 3) des Netzwerkgeräts (1) aufweist.

14. Netzwerkgerät nach einem der Ansprüche 11 bis 13,
wobei das Netzwerkgerät (1) ein Automatisierungsgerät einer Automatisierungsanlage, insbesondere ein Feldgerät, ist.

15. Netzwerk, insbesondere Netzwerk für eine Automatisierungsanlage, welches Netzwerkgeräte (1) aufweist,
wobei die Netzwerkgeräte (1) jeweils über Schnittstellen (2; 3) an andere Netzwerkgeräte des Netzwerkes anschließbar sind,
wobei eine Konfigurationseinstellung eines Netzwerkgeräts (1) nur veränderbar ist, falls ein physikalischer Beschaltungszustand der mindestens einen Schnittstelle (2; 3) des Netzwerkgeräts (1) vorliegt, der in einem Regelbetrieb des Netzwerkgeräts (1) innerhalb des Netzwerks nicht auftritt.

16. Konfigurationsgerät für ein Netzwerkgerät (1), das an mindestens eine Schnittstelle (2; 3) des Netzwerkgeräts (1) anschließbar ist, um einen physikalischen Betriebszustand an dem Netzwerkgerät (1) herbeizuführen, welcher in einem Regelbetrieb des Netzwerkgeräts (1) nicht auftritt, wodurch eine Veränderung einer Konfigurationseinstellung des Netzwerkgeräts (1) zugelassen wird.

## Claims

1. Method for securely changing a configuration setting of a network device (1) which can be connected to other network devices via at least one interface (2; 3),
wherein the configuration setting of the network device (1) can be changed provided that a detected physical connection state of the at least one interface (2; 3) of the network device (1), which does not occur during regular operation of the network device (1), is present.

2. Method according to Claim 1,
wherein the detected physical connection state of the at least one interface (2; 3) of the network device (1) is checked on the basis of predefined test criteria in order to determine whether or not the physical connection state can occur during regular operation of the network device (1).

3. Method according to Claim 1 or 2,
wherein a change in the configuration setting of the network device (1) is also allowed without authentication of the network device (1) if the determined physical connection state does not occur during regular operation of the network device (1).

4. Method according to one of Claims 1 to 3,
wherein a change in the configuration setting of the network device (1) is allowed if the determined physical connection state can occur during regular operation of the network device (1) provided that the network device (1) is successfully authenticated.

5. Method according to one of the preceding Claims 1 to 4,
wherein the configuration setting of the network device (1) has a network address of a configuration server (KS).

6. Method according to Claim 5,
wherein, if the network address of the configuration server (KS) is changed, the configuration data for the network device (1) which were provided by the previous configuration server are deleted.

7. Method according to one of the preceding Claims 1 to 6,
wherein an ability to change the configuration setting of the network device (1) is signalled to at least one other network device in the network or to a configuration device, whereupon the configuration data provided for reconfiguring the network device (1) are automatically transmitted to the network device (1).

8. Method according to Claim 7,
wherein the transmitted configuration data for changing the configuration setting of the network device (1) are stored in a configuration data memory (7) of the network device (1).

9. Method according to Claim 1,
wherein the at least one interface (2; 3) of the network device (1) is connected to a configuration device which causes a physical connection state, which does not occur during regular operation of the network device (1), in the network device (1) in order to allow a change in the configuration setting of the network device (1).

10. Method according to Claim 9,
wherein, after the change in the configuration setting of the network device (1) is allowed, the configuration device or another network device transmits configuration data provided for reconfiguring the network device (1) via the same interface or another interface of the network device (1).

11. Network device (1) which can be connected to another network device via at least one interface (2; 3), wherein a configuration setting of the network device (1) can be changed only if a detected physical connection state of the at least one interface (2; 3) of the network device (1), which does not occur during regular operation of the network device (1), is present.

12. Network device according to Claim 11,
wherein the interface (2; 3) is a wireless or wired interface.

13. Network device according to Claim 11 or 12,
wherein the network device (1) has a detection device (8) for detecting the physical connection state of the at least one interface (2; 3) of the network device (1).

14. Network device according to one of Claims 11 to 13,
wherein the network device (1) is an automation device of an automation installation, in particular a field device.

15. Network, in particular network for an automation installation, which has network devices (1),
wherein the network devices (1) can each be connected to other network devices in the network via interfaces (2; 3),
wherein a configuration setting of a network device (1) can be changed only if a physical connection state of the at least one interface (2; 3) of the network device (1), which does not occur during regular operation of the network device (1) within the network, is present.

16. Configuration device for a network device (1), which can be connected to at least one interface (2; 3) of the network device (1) in order to cause a physical operating state, which does not occur during regular operation of the network device (1), in the network device (1), as a result of which a change in a configuration setting of the network device (1) is allowed.

## Revendications

1. Procédé de modification sécurisée d'un paramétrage de configuration d'un périphérique de réseau (1) qui peut être raccordé à d'autres périphériques de réseau via au moins une interface (2 ; 3), le paramétrage de configuration du périphérique de réseau (1) pouvant être modifié dans la mesure où on a un état de câblage physique détecté de l'au moins une interface (2 ; 3) du périphérique de réseau (1) qui ne se présente pas dans un fonctionnement normal du périphérique de réseau (1).

2. Procédé selon la revendication 1, l'état de câblage physique détecté de l'au moins une interface (2 ; 3) du périphérique de réseau (1) étant vérifié, sur la base de critères de contrôle prédéfinis, pour établir si l'état de câblage physique peut se présenter ou non dans un fonctionnement normal du périphérique de réseau (1).

3. Procédé selon la revendication 1 ou 2, une modification du paramétrage de configuration du périphérique de réseau (1) étant également autorisée sans authentification du périphérique de réseau (1) si l'état de câblage physique déterminé ne se présente pas dans un fonctionnement normal du périphérique de réseau (1).

4. Procédé selon l'une des revendications 1 à 3, une modification du paramétrage de configuration du périphérique de réseau (1) étant autorisée si l'état de câblage physique déterminé peut se présenter dans un fonctionnement normal du périphérique de réseau (1) dans la mesure où une authentification du périphérique de réseau (1) est réalisée avec succès.

5. Procédé selon l'une des revendications précédentes 1 à 4, le paramétrage de configuration du périphérique de réseau (1) présentant une adresse réseau d'un serveur de configuration (KS).

6. Procédé selon la revendication 5, les données de configuration du périphérique de réseau (1) fournies par le serveur de configuration actuel étant effacées en cas de modification de l'adresse réseau du serveur de configuration (KS).

7. Procédé selon l'une des revendications précédentes 1 à 6, une variabilité du paramétrage de configuration du périphérique de réseau (1) étant signalée à au moins un autre périphérique de réseau du réseau ou à un appareil de configuration, suite à quoi les données de configuration prévues pour une reconfiguration du périphérique de réseau (1) sont transmises automatiquement au périphérique de réseau (1).

8. Procédé selon la revendication 7, les données de configuration transmises destinées à la modification du paramétrage de configuration du périphérique de réseau (1) étant sauvegardées dans une mémoire de données de configuration (7) du périphérique de réseau (1).

9. Procédé selon la revendication 1, l'au moins une interface (2 ; 3) du périphérique de réseau (1) étant reliée à un appareil de configuration qui induit, sur le périphérique de réseau (1), un état de câblage physique qui ne se présente pas dans un fonctionnement normal du périphérique de réseau (1) afin de permettre une modification du paramétrage de configuration du périphérique de réseau (1).

10. Procédé selon la revendication 9, l'appareil de configuration ou un autre périphérique de réseau transmettant, après autorisation de la modification du paramétrage de configuration du périphérique de réseau (1), des données de configuration prévues pour une reconfiguration du périphérique de réseau (1) via la même ou une autre interface du périphérique de réseau (1) .

11. Périphérique de réseau (1) pouvant être raccordé à un autre périphérique de réseau via au moins une interface (2 ; 3), un paramétrage de configuration du périphérique de réseau (1) ne pouvant être modifié qu'en présence d'un état de câblage physique détecté de l'au mois une interface (2 ; 3) du périphérique de réseau (1) qui ne se présente pas dans un fonctionnement normal du périphérique de réseau (1).

12. Périphérique de réseau selon la revendication 11, l'interface (2 ; 3) étant une interface sans fil ou filaire.

13. Périphérique de réseau selon la revendication 11 ou 12, le périphérique de réseau (1) comportant un dispositif de reconnaissance (8) pour reconnaître l'état de câblage physique de l'au moins une interface (2 ; 3) du périphérique de réseau (1).

14. Périphérique de réseau selon l'une des revendications 11 à 13, le périphérique de réseau (1) étant un appareil d'automatisation d'une installation d'automatisation, en particulier un appareil de terrain.

15. Réseau, en particulier réseau pour une installation d'automatisation, comportant des périphériques de réseau (1), les périphériques de réseau (1) pouvant être raccordés à d'autres périphériques de réseau du réseau respectivement via des interfaces (2 ; 3), un paramétrage de configuration d'un périphérique de réseau (1) ne pouvant être modifié qu'en présence d'un état de câblage physique de l'au mois une interface (2 ; 3) du périphérique de réseau (1) qui ne se présente pas dans un fonctionnement normal du périphérique de réseau (1) au sein du réseau.

16. Appareil de configuration pour un périphérique de réseau (1) pouvant être raccordé à au moins une interface (2 ; 3) du périphérique de réseau (1) pour induire, sur le périphérique de réseau (1), un état de fonctionnement physique qui ne se présente pas dans un fonctionnement normal du périphérique de réseau (1), suite à quoi une modification d'un paramétrage de configuration du périphérique de réseau (1) est autorisée.
